# DEMANDE DE BREVET EUROPEEN

(11) **EP 4 012 598 A1**
(43) Date de publication de la demande: **15.06.2022**
(21) Numéro de dépôt: 21171632.9
(22) Date de dépôt: 30.04.2021
(51) Int. Cl.: G06F 40/55, G06F 40/211, G06F 40/284, G06F 40/30

(54) **SYSTÈME ET PROCÉDÉ DE CONVERSION D'UN DOCUMENT SOURCE EN LANGAGE NATUREL EN UNE REPRÉSENTATION ABSTRAITE EN LANGAGE UNIVERSEL AYANT UN SENS GARANTI**

(30) Priorité: 14.12.2020 FR 2013202
(71) Demandeur: CS Group - France, 92350 Le Plessis-Robinson (FR)
(72) Inventeur: BERMENT, Vincent, 92350 LE PLESSIS-ROBINSON (FR)
(74) Mandataire: Argyma

(57) **Abrégé**

Un procédé de conversion, mis en œuvre par ordinateur, d'un document source (DS) en langage naturel en une représentation abstraite en langage universel ayant un sens garanti (RA), le procédé de conversion comprenant une phase d'analyse (P1) qui comprend : une étape d'analyse morphologique (P11) au cours de laquelle chaque phrase est transformée en un graphe de chaînes (GC) représentant la suite des solutions lexicales pour les différents mots de la phrase, une étape d'analyse structurale sémantique (P12) au cours de laquelle le graphe de chaînes (GC) est transformé en une collection de structures multiniveaux (SMC), une étape de désambiguïsation (P13) au cours de laquelle une structure multiniveau concrète est sélectionnée (SMC1) et une étape de conversion (P15) de la structure multiniveau sélectionnée en la représentation abstraite (RA).

## Description

### DOMAINE TECHNIQUE

La présente invention concerne le domaine de la conversion d'un document source en langage naturel en une représentation abstraite en langage universel ayant un sens garanti, en particulier, à des fins de traduction ou d'élimination de contradiction.

Dans le domaine de la traduction d'un document source en un document cible, il est connu de traduire le document source au moyen d'un système de traduction, mis en œuvre par ordinateur, par apprentissage statistique à partir de lexiques et de syntaxes préalablement appris. Un tel système de traduction est rapide mais possède une prouvabilité faible. Le sens du document cible n'est pas garanti et il peut exister des erreurs de sens. Aussi, il est nécessaire de réviser de manière approfondie le document cible obtenu pour obtenir un texte de qualité.

Lorsque le document source comporte de très nombreuses phrases (par exemple, une spécification d'un équipement/système technique complexe), des erreurs peuvent être présentes dans le document source qui induisent une contradiction. Par exemple, le document source peut indiquer à un premier passage « la lampe possède trois couleurs : rouge, orange et vert » et à un deuxième passage « En cas de dysfonctionnement, la lampe s'allume en jaune ». Il existe ainsi une contradiction entre les passages du document source. De manière générale, une contradiction peut correspondre à un manque ou une incohérence dans le document source.

La présence d'une ou plusieurs contradictions dans une spécification peut être critique étant donné qu'elle peut engager la responsabilité du rédacteur. Pour limiter ce risque, une spécification subit de nombreuses relectures mais le risque ne peut pas être annulé.

Une contradiction est encore plus pénalisante lorsque l'on doit traduire un document source en un document cible dans une autre langue. Une contradiction dans le document source peut induire des défauts de traduction majeurs dans le document cible.

On connaît dans l'art antérieur par la demande de brevet US6704700A un système pour convertir un document source en langage naturel dans un langage universel du type UNL (Universal Networking Language). Un tel système de traduction permet d'offrir une traduction de manière automatique et de meilleure qualité. Néanmoins, le sens du document source n'est pas garanti et il subsiste de nombreuses erreurs/imprécisions. Du fait de ces inconvénients, il n'est pas aisé de déterminer des contradictions.

L'invention vise ainsi à éliminer au moins certains de ces inconvénients en améliorant la conversion d'un document source dans un langage universel et en améliorant la détection de contradiction dans un tel type de langage.

### PRESENTATION DE L'INVENTION

L'invention concerne un procédé de conversion, mis en œuvre par ordinateur, d'un document source en langage naturel en une représentation abstraite en langage universel ayant un sens garanti, ci-après « représentation abstraite », le document source comprenant une pluralité de phrases, le procédé de conversion comprenant une phase d'analyse qui comprend :
- Une étape d'analyse morphologique au cours de laquelle chaque phrase est transformée en un graphe de chaînes représentant la suite des solutions lexicales pour les différents mots de la phrase,
- Une étape d'analyse structurale sémantique au cours de laquelle le graphe de chaînes est transformé en une collection de structures multiniveaux, chaque structure multiniveau représentant la syntaxe et la sémantique de chaque phrase obtenue à partir des solutions lexicales du graphe de chaînes,
- Une étape de désambiguïsation au cours de laquelle une structure multiniveau concrète est sélectionnée et
- Une étape de conversion de la structure multiniveau sélectionnée en la représentation abstraite.

L'étape d'analyse structurale sémantique permet de déterminer tous les sens d'un graphe de chaînes, c'est-à-dire, toutes les solutions sémantiques d'une phrase. L'étape de désambiguïsation permet de choisir la solution sémantique la plus adaptée et ainsi former une représentation abstraite dont le sens est garanti. Cela permet de réaliser des traductions de qualité et/ou de déterminer des contradictions de manière optimale.

De manière avantageuse, les structures multiniveaux, en particulier les structures de Vauquois, représentent à la fois la syntaxe et la sémantique du texte. Cela permet de faciliter la reformulation lors de l'étape de désambiguïsation interactive et de définir le sens de manière rigoureuse.

De préférence, l'étape d'analyse structurale est mise en œuvre par un analyseur structural utilisant des règles structurales définies dans au moins une grammaire STCG. L'utilisation de règles déterminées dans une grammaire STCG permet de pouvoir valider les règles de manière pratique pour un linguiste étant donné qu'elles sont déclaratives et donc compréhensibles en tant que tel sans interprétation poussée.

De manière préférée, l'étape d'analyse structurale est mise en œuvre par un analyseur structural utilisant des règles structurales définies dans au moins une grammaire STCG et au moins une grammaire AMUFA. L'utilisation conjointe et complémentaire des technologies STCG et AMUFA permet de bénéficier de la puissance de STCG et de la vitesse d'AMUFA. La complexité reste avantageusement réduite étant donné que les règles de la grammaire STCG sont volontairement limitées à du « hors contexte » et peuvent ainsi être traités par des algorithmes ayant une complexité bien plus faible que des règles contextuelles.

Selon un aspect de l'invention, en cas d'ambiguïté, au cours de l'étape de désambiguïsation, au moins une reformulation sémantique est proposée à un opérateur afin qu'il réalise la sélection d'une structure multiniveau parmi une pluralité de structures multiniveaux. L'opérateur bénéficie avantageusement de reformulations pour choisir entre les diverses solutions sémantiques. La nature projective (concrète) des structures de Vauquois produites permet de faciliter cette reformulation.

Selon un aspect de l'invention, la structure multiniveau sélectionnée étant concrète, c'est-à-dire comportant l'ensemble des mots de ladite phrase, la phase d'analyse comprend une étape d'abstraction de la structure multiniveau concrète en une structure multiniveau abstraite dans laquelle le nombre de mots est modifié afin de simplifier l'expression du sens de la phrase. Une structure multiniveau abstraite permet d'accélérer une phase ultérieure de génération ou de raisonnement en requérant moins de ressources informatiques.

De préférence, la représentation abstraite est un graphe UNL « Universal Networking Language ». Une telle représentation abstraite est utilisée pour réaliser un pivot linguistique.

Selon un aspect de l'invention, le procédé de conversion comprend une phase de génération au cours de laquelle la représentation abstraite est convertie en un document en langage naturel cible. Ainsi, on tire avantage de la représentation abstraite à sens garanti pour obtenir un document en langue source dont le sens est précisé ou un document en langue cible dénué d'erreur sémantique, en particulier, grâce à un document compagnon qui explicite le sens correct en cas d'ambiguïté. Cela est particulièrement pertinent pour obtenir un document cible dans une langue différente de celle du document source.

Selon un aspect de l'invention, le procédé comprend une phase de raisonnement au cours de laquelle les contradictions dans la représentation abstraite sont détectées afin de former une représentation abstraite corrigée.

La pertinence de la représentation abstraite permet de faciliter la détection et l'élimination de contradiction dans le document source. En effet, étant donné que le sens est garanti, des contradictions de sens peuvent être détectées de manière optimale.

De préférence, la phase de raisonnement comporte :
- Une étape de conversion logique de la représentation abstraite en une pluralité d'équations logiques et
- Une étape de détection de contradiction dans la pluralité d'équations logiques au moyen d'un analyseur logique.

L'analyseur logique, appelé également raisonneur, permet de déterminer des contradictions entre les équations formées à partir de la représentation abstraite. Le sens garanti de la représentation abstraite permet une analyse logique performante. La conversion du document source en équations logiques pertinentes permet avantageusement d'appliquer un moteur de règles logiques afin de déterminer toute contradiction sur l'ensemble du document source. Ainsi, une spécification technique de plusieurs centaines de pages peut être analysée de manière automatique et rigoureuse pour détecter toute contradiction.

De préférence, l'analyseur logique utilise au moins une ontologie définissant des conditions logiques. De telles conditions logiques forment de nouvelles équations logiques qui sont susceptibles de révéler de nouvelles contradictions.

De préférence, l'analyseur logique utilise au moins une ontologie générale et au moins une ontologie spécifique au domaine technique auquel appartient le document source.

Une telle ontologie spécifique permet d'améliorer la détection de contradiction en s'appuyant sur un glossaire logique de termes liés au métier auquel appartient le document source. Une telle ontologie permet de définir les termes propres au métier afin de permettre la détection de contradictions avec des connaissances implicites. La détection de contradictions est sophistiquée et permet de détecter des contradictions à partir d'une source externe qui fait référence.

De préférence, les équations logiques sont exprimées dans un format OWL dont la faible puissance d'expression évite l'indécidabilité.

L'invention concerne également un système de conversion, mis en œuvre par ordinateur, d'un document source en langage naturel en une représentation abstraite en langage universel ayant un sens garanti, ci-après « représentation abstraite », le document source comprenant une pluralité de phrases, le système de conversion comprenant un module d'analyse configuré pour :
- Réaliser une étape d'analyse morphologique au cours de laquelle chaque phrase est transformée en un graphe de chaînes représentant la suite des solutions lexicales pour les différents mots de la phrase,
- Réaliser une étape d'analyse structurale sémantique au cours de laquelle le graphe de chaînes est transformé en une collection de structures multiniveau, chaque structure multiniveau représentant la syntaxe et la sémantique de chaque phrase obtenue à partir des solutions lexicales du graphe de chaînes,
- Réaliser une étape de désambiguïsation au cours de laquelle une structure multiniveau concrète est sélectionnée et
- Réaliser une étape de conversion de la structure multiniveau sélectionnée en la représentation abstraite.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
[Fig. 1] La figure 1 est une représentation schématique des phases d'un procédé de traduction selon une mise en œuvre de l'invention.
[Fig. 2] La figure 2 est une représentation schématique des étapes d'une première phase d'analyse.
[Fig. 3] La figure 3 est une représentation d'un graphe de chaînes suite à l'étape d'analyse morphologique.
[Fig. 4] La figure 4 est une représentation schématique de l'étape d'analyse structurale.
[Fig. 5A] La figure 5A est une représentation simplifiée d'une première structure de Vauquois.
[Fig. 5B] La figure 5B est une représentation simplifiée d'une deuxième structure de Vauquois.
[Fig. 6] La figure 6 est une représentation schématique d'un procédé de traduction comprenant une phase de raisonnement.
[Fig. 7] La figure 7 est une représentation schématique des étapes d'une phase de raisonnement selon une mise en œuvre de l'invention.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention va être présentée pour une application dans le domaine de la traduction dans laquelle un document en langage naturel source DS (ci-après document source DS) doit être traduit dans un document en langage naturel cible DC (ci-après document cible DC). Le document source DS et le document cible DC sont dans des langues différentes. Dans cet exemple, le document source DS est en langue française mais il va de soi qu'il pourrait être dans une langue différente.

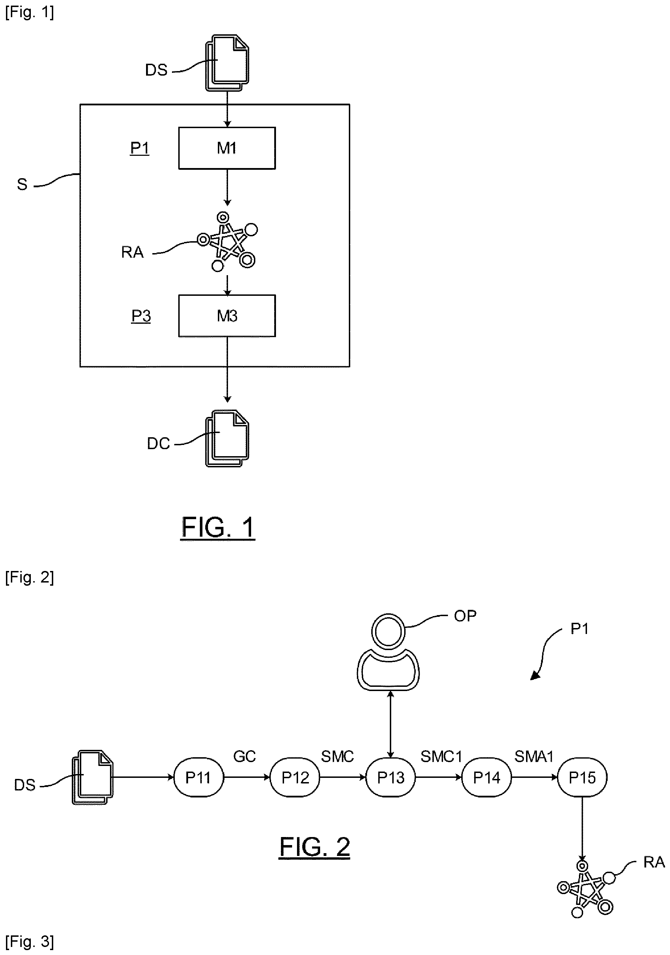

Dans cet exemple de mise en œuvre, en référence à la figure 1, il va être présenté un système de conversion S d'un document source DS en une représentation abstraite en langage universel ayant un sens garanti RA, ci-après, représentation abstraite RA. Dans cet exemple, le système de conversion S est mis en œuvre à des fins de traduction du document source DS en un document cible DC dans une autre langue. Le système de conversion S est mis en œuvre par ordinateur.

Dans cet exemple, le système de conversion S comprend un module d'analyse M1 configuré pour convertir le document source DS en une représentation abstraite RA et un module de génération M3 configuré pour convertir la représentation abstraite RA en un document cible DC. Un exemple de mise en œuvre va être dorénavant présenté.

Comme illustré à la figure 1, le procédé comporte une phase d'analyse P1 qui est mise en œuvre par le module d'analyse M1, le document source DS est traité de manière à être exprimé dans une représentation abstraite RA. Selon l'invention, la représentation abstraite RA se présente sous la forme d'un graphe UNL pour « Universal Networking Language ». Un graphe UNL contient uniquement le sens de chaque phrase. L'avantage d'un graphe UNL est d'être léger et interlingue (indépendant des langues source et cible), ce qui permet de former un standard de représentation. Le langage UNL est un langage formel informatique permettant de coder une représentation du sens d'un énoncé. Un graphe UNL permet de mettre en relation des termes UNL (UW) afin de définir le sens d'une expression ou d'une phrase. Un tel graphe UNL est connu de l'homme du métier et permet de former un pivot pour la traduction entre un document source DS et un document cible DC. Bien qu'un tel graphe UNL soit connu de l'homme du métier, sa qualité peut varier en fonction de sa conception. Dans l'exemple de mise en œuvre qui va être présenté, il est formé un graphe UNL ayant un sens garanti, c'est à dire, de qualité élevée.

Dans cet exemple de mise en œuvre, le module d'analyse M1 réalise différentes étapes afin d'obtenir une représentation abstraite RA qui soit de qualité.

En référence à la figure 2, la phase d'analyse P1 comporte une étape d'analyse morphologique P11 de manière à transformer chaque phrase du document DS en langage naturel source en un graphe de chaînes GC représentant la suite des solutions lexicales pour les différents mots de la phrase.

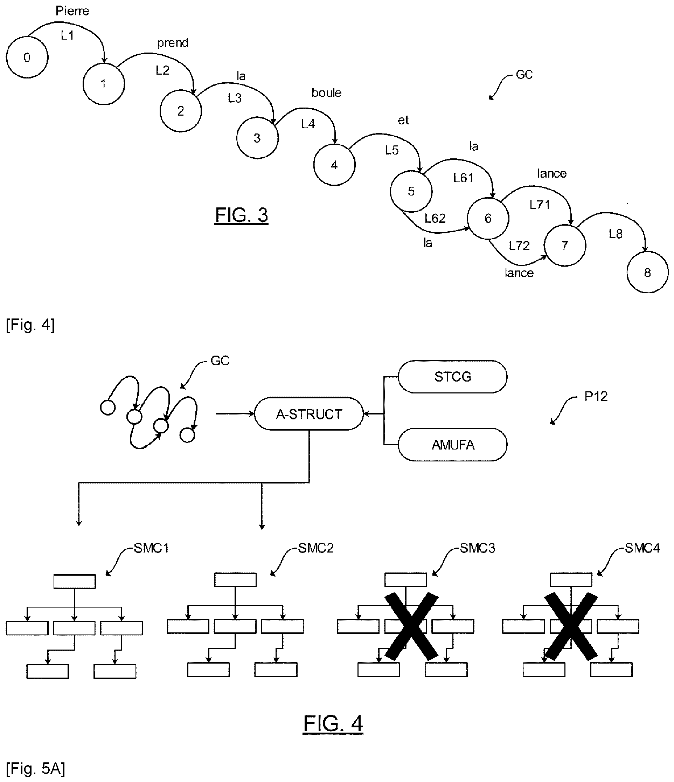

En effet, les mots d'une phrase peuvent avoir différents sens. Un graphe de chaînes GC (représenté à la figure 3) comprend un ensemble de nœuds reliés par des arcs. Les nœuds représentent les espaces entre les mots tandis que les arcs représentent les différents sens des mots. Etant donné que chaque mot peut avoir plusieurs sens différents, il en résulte qu'une phrase peut comporter de très nombreux sens (une combinatoire des différents sens de chaque mot de la phrase).

A titre d'exemple, en référence à la figure 3, il est représenté un exemple de graphe de chaînes GC suite à une étape d'analyse morphologique P11 de la phrase « Pierre prend la boule et la lance ». Sur ce graphe de chaînes GC, il apparait que le mot « la » possède deux sens : pronom (segment L61) et article (segment L62). De même, le mot « lance » possède deux sens : verbe (segment L71) et nom (segment L72). Ainsi, la phrase comporte 4 sens différents. La transformation en graphe de chaînes GC est réalisée en s'appuyant sur les catégories morphosyntaxiques des mots de la phrase.

Dans cet exemple, l'étape d'analyse morphologique P11 est réalisée par trois algorithmes Ariane successifs (une implémentation du système Ariane est disponible sur le site lingwarium.org) de manière à obtenir un graphe de chaînes GC :
- Un algorithme ATEF réalisant une phase AM qui traite les morphologies de types flexionnelle, compositionnelle et dérivationnelle,
- Un algorithme EXPANS réalisant une phase AX qui complète le résultat de l'algorithme AM précédent avec les informations lexicales et prépare le travail de la phase suivante concernant le traitement des locutions,
- Un algorithme ROBRA réalisant une phase AS qui traite les expressions polylexicales (expressions figées, locutions...).

Chaque phrase du document source DS est ainsi transformée en un graphe de chaînes GC. Il va néanmoins de soi que plusieurs phrases pourraient également être traitées ensemble pour former un unique graphe de chaînes GC mais cela augmente la complexité.

En référence à la figure 2, la phase d'analyse P1 comporte une étape d'analyse structurale P12 de manière à transformer chaque graphe de chaînes GC en une collection de structures multiniveau concrètes SMC.

Par structure multiniveau, on entend une structure comportant au moins un niveau de définition syntaxique et au moins un niveau de définition sémantique. De manière préférée, la structure multiniveau est une structure de Vauquois qui comporte deux niveaux syntaxiques et un niveau sémantique. Les structures syntaxiques sont, d'une part, une structure de constituants immédiats et, d'autre part, une structure de dépendances syntaxiques. La structure sémantique est un ensemble de relations logico-sémantiques entre les mots de la phrase portant un sens, ces relations correspondant aux relations actancielles et circonstancielles de la grammaire traditionnelle.

Par structure multiniveau concrète ou projective, on entend une structure multiniveau dont tous les mots de la phrase sont présents dans l'ordre de la phrase telle que proposée. Une telle structure concrète est avantageuse étant donné qu'elle est aisément compréhensible par un opérateur, en particulier, pour une étape de désambiguïsation.

Les structures multiniveaux concrètes SMC représentent à la fois la syntaxe et la sémantique de la phrase. Le terme collection est utilisé car il existe autant de structures multiniveaux concrètes SMC que de solutions syntaxiques et sémantiques. En référence à la figure 4, un graphe de chaînes GC est transformé en deux structures multiniveaux concrètes SMC1, SMC2 (collection comprenant deux éléments).

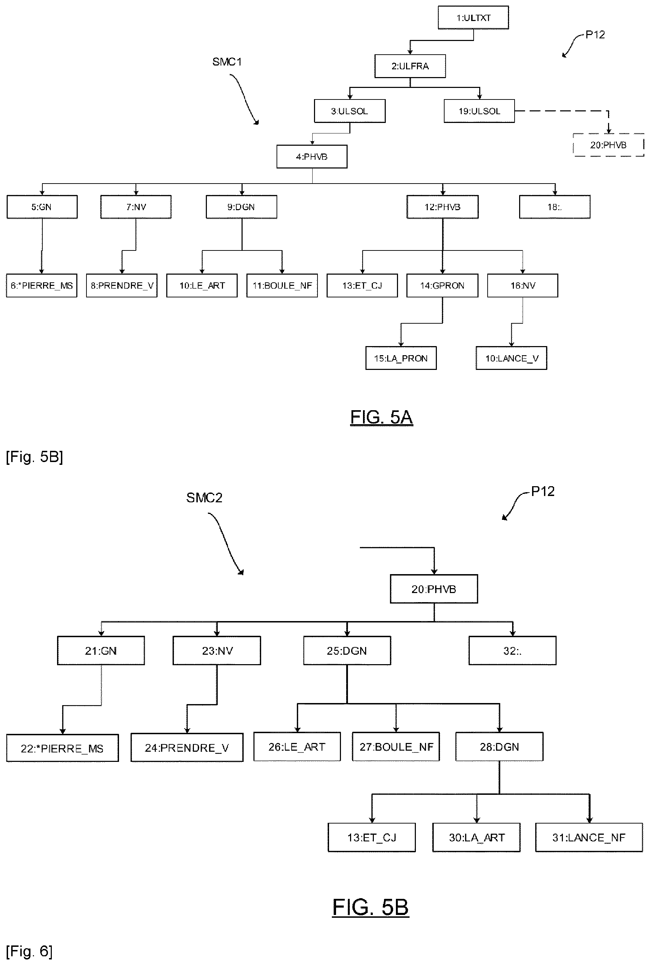

Dans le cas présent, selon une première solution sémantique A : « Pierre » est un nom propre, « prend » est un verbe, « la » est un article, « boule » est un nom commun féminin, « et » est une conjonction, « la » est un pronom et « lance » est un verbe (Figure 5A). Selon une deuxième solution sémantique B : « Pierre » est un nom propre, « prend » est un verbe, « la » est un article, « boule » est un nom commun féminin, « et » est une conjonction, « la » est un article et « lance » est un nom commun féminin (Figure 5B). Ainsi, dans cet exemple, un arbre est transformé en deux structures de Vauquois différentes.

De manière préférée, en référence à la figure 4, l'étape d'analyse structurale P12 est mise en œuvre par un analyseur structural A-STRUCT qui met en œuvre ou plusieurs règles s'appuyant sur des grammaires STCG et/ou AMUFA.

Une grammaire de correspondance chaîne-arbre ou grammaire STCG pour « String-Tree Correspondence Grammar » permet de définir des règles pour une phrase de de manière puissante. Autrement dit, une grammaire STCG permet d'exprimer de manière déclarative toute correspondance entre une chaîne et une structure multiniveau. L'utilisation de grammaires STCG pour exprimer des correspondances projectives est un cas très particulier qui permet une grande lisibilité des règles. L'intérêt de les utiliser est la très grande proximité de son langage déclaratif avec les connaissances des linguistes, ce qui rend possible une vérification rigoureuse de la conformité des grammaires produites avec la réalité linguistique. Pour garantir le sens, on peut ainsi prouver de manière pratique que la grammaire est juste.

A titre d'exemple, une règle d'une grammaire STCG peut indiquer qu'un groupe nominal comporte un sujet, un verbe et un nom. De même, l'absence de règle indiquant qu'un article peut précéder un verbe interdit des solutions de ce type. Grâce à ces règles linguistiques, l'analyseur structural A-STRUCT transforme le graphe de chaînes GC de la figure 4 en deux structures multiniveau concrètes SMC1, SMC2 (Figures 5A, 5B) qui sont les seules susceptibles d'être viables suite à l'application des règles. Autrement dit, l'analyseur structural A-STRUCT agit comme un filtre qui élimine les solutions sémantiques parmi l'ensemble des solutions sémantiques du graphe de chaînes GC qui ne respectent pas les règles. En référence à la figure 4, dans cet exemple, parmi les 4 solutions sémantiques offertes par le graphe de chaînes GC de la figure 3, deux solutions sont ainsi supprimées.

Une grammaire STCG offre avantageusement un moyen rapide et sûr afin de définir la ou les structures multiniveaux viables. Un inconvénient des grammaires STCG est qu'en contrepartie de leur puissance d'expression, les temps d'analyse sont très élevés. Pour éliminer cet inconvénient, en référence à la figure 4, les grammaires STCG sont utilisées avec une grammaire AMUFA qui est un algorithme d'analyse syntaxique Analyseur MUltiple FActorisant (analyseur de type Earley ou CYK étendu aux graphes de confusion) dont la complexité temporelle est en O(n3). L'utilisation d'un tel algorithme est rendue possible par le fait que les grammaires STCG produites sont volontairement de nature « hors contexte », ce qui réduit la complexité. Une grammaire AMUFA permet d'atteindre des performances considérablement plus élevées qu'avec les grammaires STCG seules. Comme il est plus difficile de vérifier une grammaire exprimée en AMUFA qu'une grammaire STCG, les deux technologies sont complémentaires pour former des structures multiniveaux comme illustré aux figures 5A et 5B.

Afin de lever toute ambiguïté, la phase d'analyse P1 comporte une étape de désambiguïsation P13 comme illustré à la figure 2. Au cours de cette étape, il est demandé à un opérateur OP de sélectionner la solution sémantique correcte, en particulier, entre les solutions sémantiques A et B (structures multiniveaux SMC1, SMC2). Cela permet de sélectionner un sens lorsqu'il existe des solutions sémantiques multiples comme dans le cas précédent. De préférence, l'étape de désambiguïsation P13 met en œuvre un algorithme qui adresse une reformulation sémantique non ambiguë à l'opérateur OP qui peut se présenter sous diverses formes, par exemple, un nuage de mots, des images, une question, en particulier, à choix multiples. Dans cet exemple, il est demandé à l'opérateur OP si :
- A) Pierre prend la boule et la jette.
- B) Pierre prend deux objets.

L'opérateur OP, qui connaît le sens de la phrase dans le texte, répond en choisissant le sens qui est correct. Dans cet exemple, c'est la solution sémantique A (SMC1) qui est retenue et la structure de Vauquois SMC2 de la solution sémantique B est supprimée. De manière préférée, la réponse de l'opérateur OP est mémorisée dans un document compagnon qui permet de répertorier les ambiguïtés et leurs solutions. Ainsi, au fur et à mesure que le document compagnon est complété, les ambiguïtés sont traitées de manière automatique. Le document compagnon, pour le document source DS, donne la liste des ambiguïtés qu'il contient et le sens correct parmi les sens possibles. De manière analogue, pour le document cible DC, le document compagnon fournit à l'opérateur OP les informations pour accéder au sens correct chaque fois qu'une ambiguïté est présente.

De manière alternative, l'étape de désambiguïsation P13 est mise en œuvre par un algorithme de décision mis en œuvre par ordinateur, par exemple, un réseau de neurones ou autre type d'intelligence artificielle.

De manière optionnelle, suite à l'étape de désambiguïsation P13, la phase d'analyse P1 comporte une étape d'abstraction P14 qui est optionnelle. Au cours de cette étape, la structure multiniveau concrète SMC1 (ou projective), ici une structure de Vauquois, est transformée en une structure multiniveau abstraite SMA1 (non représentée). À titre d'exemple, les nœuds de la structure multiniveau concrète SMC1 portant des mots variabilisés dans d'autres nœuds (l'adverbe composé « ne-pas » des verbes à la forme négative, par exemple, est porté sous forme d'attribut sur le verbe) sont supprimés. De même, des nœuds de la structure multiniveau concrète SMC1 peuvent être dupliqués quand une ellipse a supprimé des mots dans la phrase. Par exemple, dans la phrase « Marie mange une poire et Pierre une pomme », il y a deux propositions : « Marie mange une poire » et « Pierre mange une pomme ». Dans la structure multiniveau abstraite SMA1, le verbe « mange » est ajouté dans la deuxième proposition.

De manière préférée, la phase d'analyse P1 comporte une étape de conversion P15 de la structure multiniveau sélectionnée (abstraite SMA1 ou concrète SMC1) en une représentation abstraite RA, en particulier, en un graphe UNL. Cette conversion peut être réalisée directement à partir des structures multiniveaux obtenues suite à l'étape P13 ou P14.

En pratique, le graphe UNL est utilisé principalement à partir de l'analyse d'un texte en langue anglaise. Pour obtenir un graphe compatible, chaque structure de Vauquois en langue française est préalablement convertie en structure de Vauquois en langue anglaise afin d'obtenir le graphe UNL « standard ».

Dans cet exemple, on réalise une étape de transfert lexical, une étape de transfert structural et une étape de génération structurale au moyen d'algorithmes EXPANS pour la phase TL, et ROBRA pour les phases TS et GS qui sont des algorithmes Ariane (disponibles sur le site lingwarium.org), ce qui permet d'obtenir une structure équivalente à celle qu'on obtiendrait en analysant la phrase si elle était en anglais. En pratique, les relations logico-sémantiques des structures de Vauquois « anglaises » sont interprétées pour produire les relations sémantiques du graphe UNL. Les unités lexicales des structures de Vauquois « anglaises » sont transformées en mots universels (UW).

Comme illustré à la figure 1, le procédé comporte ensuite une phase de génération P3 qui est mise en œuvre par le module de génération M3. Au cours de cette phase de génération P3, la représentation abstraite RA est utilisée pour générer le document cible DC dans la langue souhaitée. De manière avantageuse, la même représentation abstraite RA peut être utilisée pour générer des documents cibles DC dans plusieurs langues différentes.

Du fait du sens garanti obtenu pour la représentation abstraite RA, le document source DS est parfaitement déterminé et de nombreux documents cibles DC peuvent être produits de manière rapide et avec une qualité élevée. Toute erreur de sens est éliminée, grâce au document compagnon qui contient les éventuelles ambiguïtés accompagnées de l'interprétation correcte.

De même, il peut également être généré un document source DS dont la clarté a été améliorée grâce au document compagnon qui contient les éventuelles ambiguïtés accompagnées de l'interprétation correcte.

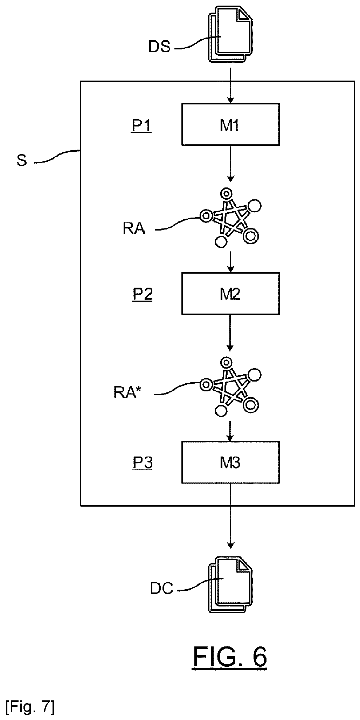

Dans un autre exemple de mise en œuvre, en référence à la figure 6, il va être présenté un système de conversion S pour la détermination de contradictions dans un document source DS qui réalise en outre une traduction en un document cible DC dans une autre langue. Il va de soi que la phase de raisonnement est indépendante de la phase de génération.

Le système de conversion S comporte en outre un module de raisonnement M2 qui permet de détecter des contradictions, de les éliminer ou d'en informer l'utilisateur.

Comme illustré à la figure 6, le procédé comporte une phase de raisonnement P2 qui est mise en œuvre par un module de raisonnement M2. Au cours de cette phase de raisonnement P2, la représentation abstraite RA est traitée de manière à détecter différentes erreurs logiques, en particulier, des contradictions. On obtient avantageusement une représentation abstraite corrigée RA* dans laquelle les contradictions sont éliminées.

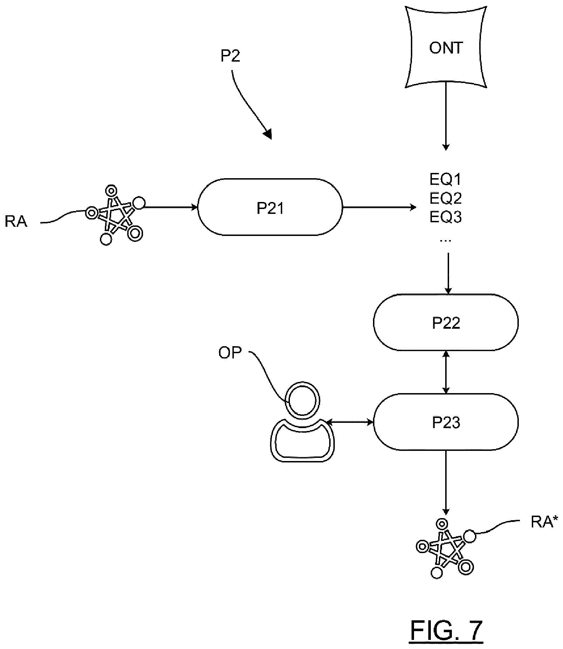

En référence à la figure 7, la phase de raisonnement P2 comporte une étape de conversion logique P21 de manière à convertir la représentation abstraite RA en une pluralité d'équations logiques EQ. L'étape de conversion logique P21 permet de produire des équations de logique mathématique à partir des graphes UNL. De manière préférée, la logique choisie est une logique de description OWL (Web Ontology Language).

La phase de raisonnement P2 comporte une étape de détection P22 configurée pour détecter à partir d'un moteur de règles logiques des contradictions dans les équations logiques obtenues suite à l'étape de conversion logique P21. Une telle étape de détection P22 est mise en œuvre, par exemple, par un analyseur logique, appelé également raisonneur, mettant en œuvre des algorithmes de déduction dont l'exemple le plus connu est le syllogisme. Un analyseur logique est connu en soi de l'homme du métier. D'autres logiques plus puissantes (prédicats du premier ou du second ordre...) sont aussi possibles. Compte tenu de la qualité de la représentation abstraite RA, la phase de raisonnement P2 est très pertinente.

De manière préférée, les équations logiques EQ sont également enrichies par une ou plusieurs ontologies ONT. Une ontologie ONT permet avantageusement de définir des conditions logiques (connaissances complémentaires). De préférence, les ontologies ONT sont aussi exprimées en OWL. On peut avantageusement disposer d'ontologies générales (bleu est différent de rouge, etc.) et d'ontologies spécifiques. Une ontologie spécifique ONT est liée au domaine d'application du document source DS. Une telle ontologie ONT permet de définir des termes propres au domaine considéré. Ainsi, dans le domaine du contrôle aérien, il peut être défini un « poste opérateur » afin de préciser qu'il correspond à équipement physique précis, qu'il comporte des attributs d'entrée, un écran, etc. Une ontologie spécifique ONT permet de définir plus précisément des termes présents dans les équations logiques, ce qui permet à l'analyseur logique de détecter de manière efficace toute potentielle contradiction.

De manière préférée, la phase de raisonnement P2 comporte une étape d'analyse interactive P23 au cours de laquelle il est demandé à un opérateur OP de sélectionner la réponse logique entre deux incohérences du document source DS. De préférence, l'étape d'analyse interactive P23 met en œuvre un algorithme qui adresse une reformulation non ambiguë à l'opérateur qui peut se présenter sous forme d'une mise en évidence de l'incohérence. Dans cet exemple, il est détecté une première contradiction entre un premier passage « la lampe possède trois couleurs : rouge, orange et vert » et à un deuxième passage « En cas de dysfonctionnement, la lampe s'allume en jaune ». Aussi, il est demandé à l'utilisateur si :
- Le jaune n'est pas une couleur possible de la lampe, dont les trois seules couleurs possibles sont rouge, orange et vert.

Les contradictions sont déterminées et corrigées de manière à former une représentation abstraite corrigée RA*. À partir de cette représentation abstraite corrigée RA*, la phase de génération P3 peut être mise en œuvre de nouveau pour générer un document cible DC dépourvu de contradiction comme illustré à la figure 6 ou un document source corrigé DS* dépourvu de contradiction.

## Revendications

1. Procédé de conversion, mis en œuvre par ordinateur, d'un document source (DS) en langage naturel en une représentation abstraite en langage universel ayant un sens garanti (RA), ci-après « représentation abstraite (RA) », le document source comprenant une pluralité de phrases, le procédé de conversion comprenant une phase d'analyse (P1) qui comprend :
- Une étape d'analyse morphologique (P11) au cours de laquelle chaque phrase est transformée en un graphe de chaînes (GC) représentant la suite des solutions lexicales pour les différents mots de la phrase,
- Une étape d'analyse structurale sémantique (P12) au cours de laquelle le graphe de chaînes (GC) est transformé en une collection de structures multiniveaux (SMC1, SMC2), chaque structure multiniveau (SMC1, SMC2) représentant la syntaxe et la sémantique de chaque phrase obtenue à partir des solutions lexicales du graphe de chaînes (GC),
- Une étape de désambiguïsation (P13) au cours de laquelle une structure multiniveau concrète est sélectionnée (SMC1) et
- Une étape de conversion (P15) de la structure multiniveau sélectionnée en la représentation abstraite (RA).

2. Procédé de conversion selon la revendication 1, dans lequel, au cours de l'étape de désambiguïsation (P13), au moins une reformulation sémantique est proposée à un opérateur (OP) afin qu'il réalise la sélection d'une structure multiniveau parmi une pluralité de structures multiniveaux (SMC1, SMC2).

3. Procédé de conversion selon l'une des revendications 1 à 2, dans lequel, l'étape d'analyse structurale (P12) est mise en œuvre par un analyseur structural (A-STRUCT) utilisant des règles structurales définies dans au moins une grammaire STCG.

4. Procédé de conversion selon la revendication 3, dans lequel, l'étape d'analyse structurale (P12) est mise en œuvre par un analyseur structural (A-STRUCT) utilisant des règles structurales définies dans au moins une grammaire STCG et au moins une grammaire AMUFA.

5. Procédé de conversion selon l'une des revendications 1 à 4, dans lequel, la structure multiniveau sélectionnée étant concrète (SMC1), c'est-à-dire comportant l'ensemble des mots de ladite phrase, la phase d'analyse (P1) comprend une étape d'abstraction (P14) de la structure multiniveau concrète (SMC1) en une structure multiniveau abstraite (SMA1) dans laquelle le nombre de mots est modifié afin de simplifier l'expression du sens de la phrase.

6. Procédé de conversion selon l'une des revendications 1 à 5, dans lequel la représentation abstraite (RA) est un graphe UNL (Universal Networking Language).

7. Procédé de conversion selon l'une des revendications 1 à 6, comprenant une phase de génération (M3) au cours de laquelle la représentation abstraite (RA) est convertie en un document cible (DC) en langage naturel.

8. Procédé de conversion selon l'une des revendications 1 à 7, comprenant une phase de raisonnement (P2) au cours de laquelle les contradictions dans la représentation abstraite (RA) sont détectées.

9. Procédé de conversion selon l'une des revendications 1 à 8, dans lequel, la phase de raisonnement (P2) comporte :
- Une étape de conversion logique (P21) de la représentation abstraite (RA) en une pluralité d'équations logiques (EQ) et
- Une étape de détection de contradiction (P22) dans la pluralité d'équations logiques (EQ) au moyen d'un analyseur logique.

10. Procédé de conversion selon la revendication 9, dans lequel, l'analyseur logique utilise au moins une ontologie (ONT) définissant des conditions logiques, de préférence, au moins une ontologie générale et au moins une ontologie spécifique au domaine technique auquel appartient le document source.

11. Procédé de conversion selon l'une des revendications 9 et 10, dans lequel, les équations logiques (EQ) sont exprimées dans un format OWL (Web Ontology Language).

12. Système de conversion (S), mis en œuvre par ordinateur, d'un document source (DS) en langage naturel en une représentation abstraite en langage universel ayant un sens garanti (RA), ci-après « représentation abstraite (RA) », le document source comprenant une pluralité de phrases, le système de conversion (S) comprenant un module d'analyse (M1) configuré pour :
- Réaliser une étape d'analyse morphologique (P11) au cours de laquelle chaque phrase est transformée en un graphe de chaînes (GC) représentant la suite des solutions lexicales pour les différents mots de la phrase,
- Réaliser une étape d'analyse structurale sémantique (P12) au cours de laquelle le graphe de chaînes (GC) est transformé en une collection de structures multiniveau (SMC1, SMC2), chaque structure multiniveau (SMC1, SMC2) représentant la syntaxe et la sémantique de chaque phrase obtenue à partir des solutions lexicales du graphe de chaînes (GC),
- Réaliser une étape de désambiguïsation (P13) au cours de laquelle une structure multiniveau concrète est sélectionnée (SMC1) et
- Réaliser une étape de conversion (P15) de la structure multiniveau sélectionnée en la représentation abstraite (RA).
